# EUROPEAN PATENT APPLICATION

(11) **EP 4 681 544 A1**
(43) Date of publication of application: **21.01.2026**
(21) Application number: 24382779.7
(22) Date of filing: 18.07.2024
(51) Int. Cl.: A23B 4/052, A23B 4/048

(54) **FLAVOURING DEVICE FOR COCKTAILS AND KITCHEN**

(71) Applicant: Cocina Sin Límites, S.L., 08339 Vilassar de Dalt Barcelona (ES)
(72) Inventor: SALVADOR MONER, Tomás, 08035 Barcelona (ES)
(74) Representative: De la Fuente Fernandez, Dionisio

(57) **Abstract**

Flavouring device for cocktails and cooking that comprises a suction body (5) that has an electric motor (6), at least one rechargeable battery (7) that acts as a source of energy for the operation of said electric motor (6), a button (8) that allows said electric motor (6) to be activated, a waste collection element (10) and a propeller element (4) that is driven by said electric motor (6) arranged above the waste collection element (10) that allows the aromatized vapor to be sucked; one or two vapers (2) that have an internal tank with cotton impregnated with an aromatic oil and glycol that volatilizes thanks to the heating of a resistance by means of a battery; and an air intake (3) attached to the suction body (5) that has two inlets and is arranged between the propeller element (4) and the vapers (2), which also has a mouthpiece (9), an opening (11) that is regulated with an lower slide (12) arranged above said aspiration body (5) and a upper slide (13) that controls the aroma or mixture, by selecting the vaper (2) to use.

## Description

### FIELD OF THE INVENTION

The present invention discloses a flavouring device for cocktails and cooking that allows flavoured smoke to be introduced into a cocktail glass or other container, in such a way that the flavoured smoke encounters the material and contents of the container, generating a particular flavour to the cocktail or to food. Another advantage of the aromatizing device is its ability to adapt the desired aroma to the device, preventing different aromas from mixing when the aroma is exchanged. The field of application of the present invention falls within the professional gastronomic industry sector and for private use in cooking and cocktails.

### BACKGROUND OF THE INVENTION

Currently, the smoking technique is a solution to improve the quality of food in the restaurant industry, both professionally and for private or recreational use. Adding flavoured smoke to a cocktail or food adds a layer of complexity to the flavour and/or aroma of the cocktail or food. When flavoured smoke is introduced into a cocktail glass or other container, the flavoured smoke comes into contact with the glass and the contents of the glass. In such a way that the molecules of the flavoured smoke dissolve in the moisture present in the glass and the contents, thus imparting the smell and flavour to the final cocktail. The flavoured smoke will thus infuse the cocktail, giving it a particular flavoured.

In the known art there is a type of smoker that comprises a closed glass dome that will retain smoke introduced from a portable smoke generator, for example, a smoke gun. The smoke generator mainly includes a chamber for receiving wood chips and shavings. The smoke generator can be powered by electrical current to generate enough heat to burn the wood chips, thereby generating smoke. Typically, the smoke is directed towards the food or drink and the glass dome is placed over the smoke and the food/drink, to allow the smoke to infuse into the food or drink.

Another type of conventional smoker includes a board that is placed next to a drink or food. The board is set on fire with a lighter and a glass cover is placed over the burning section of the board, with the edge of the cover facing down so that the cover collects the smoke and thus infuses the drink or food.

However, the smokers referred to above have several disadvantages, for example, they take up a significant amount of space, which is not desirable in a kitchen or bar. It also requires moving several parts, which could cause smoke loss. On the other hand, all they do is smoke without the possibility of adding different aromas that may be necessary for the various cocktails or foods that you want to flavour.

In the state of the art, patent application WO2021148699 reveals a smoker device for the preparation of food or drinks that, comprising a tubular main body with a front opening, which communicates with an interior combustion chamber where fuel and flavouring material is arranged before a grille or filter, and with a smoke outlet on the opposite side of said tubular body, which, through a hole provided for this purpose, communicates a hood, lid or cover suitable for covering a container with food or drinks, there also being a flame generator, which is propelled by the previous opening to burn the combustible and aromatizing material, generating a flow of smoke towards the interior of the hood, lid or cover, comprising, as a smoke outlet from the aforementioned body tubular, Multiple smoke outlets, as well as an impurity collection tank, located behind the grille or filter.

The European patent application EP3928623 reveals a device that allows the food smoking procedure to be carried out automatically and cleanly, the device for generating smoke for smoking food and drinks comprises a housing, a heating part and a capsule part pivotally connected with each other in such a way that when the device is closed, the housing forms a closed cavity having an air inlet and a smoke outlet, wherein the heating part comprises an air passage to connect the exterior of the device with a capsule; an air pump to pump air from the outside of the device into the capsule; a heating means to heat said air before reaching the capsule; cutting means for cutting holes in the upper cover of the capsule when the device is closed, and wherein the capsule part comprises a receptacle for the capsule and the smoke outlet; and a power source to power the air pump and heating means. The device further comprises a means for controlling the temperature of the heating medium, a means for controlling the pressure within the air passage and including a safety valve. The device further comprises a button for controlling the heating means and the air pump. This device allows the consumer to access a variety of smoke aromas in an easy, clean and functional way within the home. With the push of a button, hot air will enter the installed capsule and cause a gentle combustion of the natural contents of the capsule and the smoke will be directed towards the food or drink. The device can be used for cooking and preparing drinks. The device allows you to smoke food with different materials and create a totally new flavour and aroma.

The drawback of these inventions is that when you want to change the aroma, you encounter the difficulty of disassembling the circuit and changing the aroma tank or reservoir. Furthermore, it is possible that when the aroma is changed, the waste inside the circuit mixes with the new aroma and an unwanted mixture of aromas is obtained and a thorough cleaning must be done.

The present invention satisfactorily solves the existing problem, since it reveals a simple and portable flavouring device for cocktails and cooking, which allows the insertion of one or more vaping devices, which comprise a cotton impregnated with an aromatic oil volatilized by a small battery and which It is sucked by a propeller arranged above a collection device, at the upper end of the aromatizing device, which allows the aromatized vapor to be moved from the suction fan to a nozzle arranged at the outlet of the aromatizing device. The system and design of the aromatizing device allows you to make aroma changes instantly, simply by removing the vaping devices, and changing it for different vaping devices with different aromas, without the need to open, disassemble and clean the circuit to avoid mixing aromas.. The great advantage obtained in the present invention is the ease of exchanging the vaping devices and changing the aroma without there being a mixture of aromas in the device, including different aromas. Furthermore, the invention presents a functional novelty regarding the possibility of combining and selecting different flavours without having to disassemble or clean the device, and likewise the selection of the air flow and aroma intensity.

### DESCRIPTION OF THE DRAWINGS

To complement the description that is being made and in order to help a better understanding of the characteristics of the invention, according to a preferred example of its practical implementation, a set of drawings is attached as an integral part of said description, where, with an illustrative and non-limiting nature, the following has been represented:

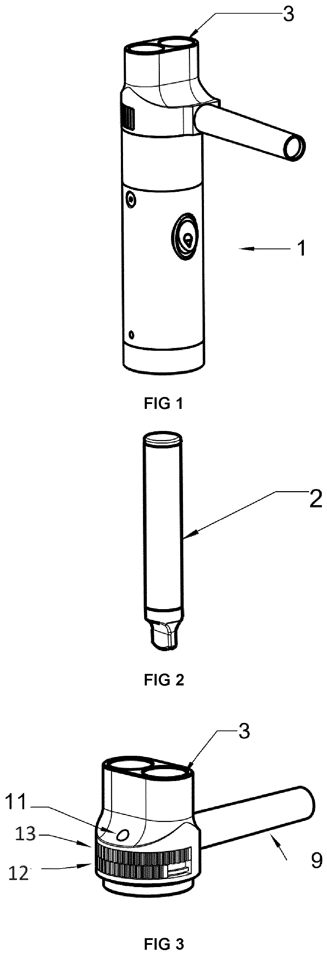

Figure 1.- Shows a view of the flavouring device (1), with the detail of the upper end of the air intake (3) with the capacity to house one or two vapers (2).
Figure 2.- Shows an external view of the vaper device (2).
Figure 3.- Shows a view of the air intake (3), showing the detail of the opening (11) that allows obtaining an optimal air flow and mixture, between the non-aromatized air and the aroma coming from the vapers (2), as well as the lower slide (12) for regulating the air flow, the upper slide (13) for selecting one or the other vape (2) or both, in addition to the mouthpiece (9) that allows the application of the aroma.

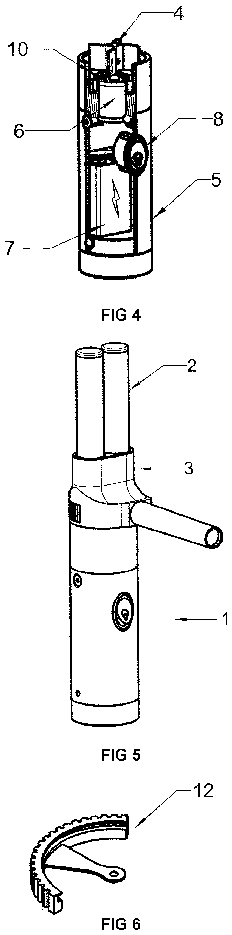

Figure 4.- Shows a vertical sectional view of the suction body (5) which is made up of an electric motor (6), powered by rechargeable batteries (7) and which is activated by a button (8). A propeller (4) located on the collecting element (10) is attached to the electric motor shaft (6).
Figure 5.- Shows a total view of the flavouring device (1) with the vapers (2) already inserted and fitted into the air intake (3) for start-up.

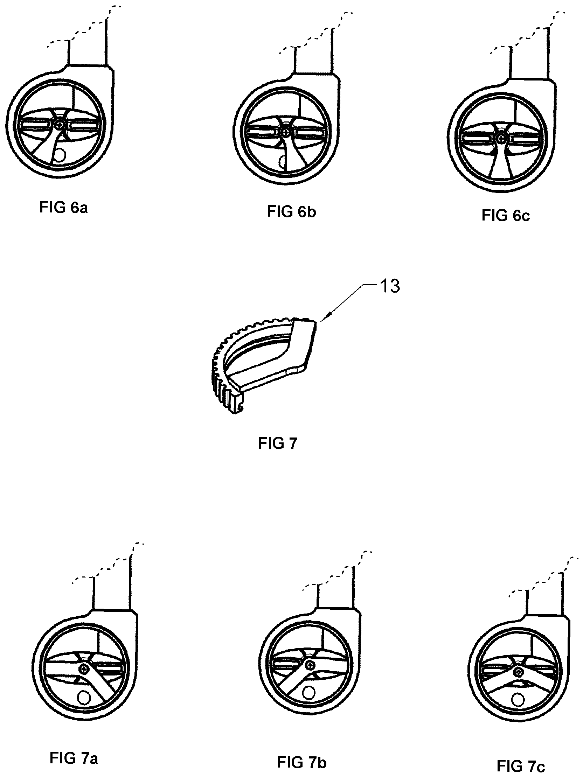

Figure 6.- Shows the lower slide (12) that allows controlling the air inlet flow for mixing with the vapor created by the vapers (2).
Figure 6a.- Shows the lower slide (12) in a larger air inlet position to generate less dense smoke
Figure 6b.- Shows the lower slide (12) in the intermediate air inlet position to generate intermediate density smoke,
Figure 6c.- Shows the lower slide (12) in the lower air inlet position to generate denser smoke.
Figure 7.- Shows a view of the upper slide (13) that allows each of the vapers (2) to be selected.
Figure 7a.- Shows a view of the upper slide (13) that allows the first of the two vapers (2) to be selected.
Figure 7b.- Shows a view of the upper slide (13) that allows selecting the second of the two vapers (2).
Figure 7c.- Shows a view of the upper slide (13) that allows the two vapers (2) to be selected at the same time.

### DESCRIPTION OF THE INVENTION

The present invention discloses a portable flavouring device for cocktails and cooking, which allows the insertion of one or two vaping devices comprising a tank with cotton impregnated with an aromatic oil and glycol, which is volatilized by heating produced by a resistance powered by an internal battery. The volatilized aromatic oil is sucked in by a propeller arranged below the vaping device and connected to an electric motor, powered by rechargeable batteries and activated by a button. The aromatizing device can be manufactured from different materials, preferably anodized aluminium or plastic and its derivatives. The device allows, by inserting the vapers into the upper end of the air intake, to generate volatilized aromatized vapor from the vaper. The vapers are housed in the air intake of the aromatizer by means of pressure, in such a way that they remain airtight and can generate air flows with flavoured vapor. The system and design of the flavouring device allows you to change the vaper with different aromas instantly, generating unique or mixed flavours, simply by removing the vaper and placing a new one with a different aroma, without the need to open, dismantle and clean the circuit to avoid the mixing of aromas, since it has a waste collection element that allows the non-volatilized oil waste from the vaper to be stored.

The aromatizing device by sucking only the aromatized volatile vapor from the vaper and by separating the vapor production area arranged in the vaping device from the suction of the propeller itself allows the change of vaper without the crossing or contamination of aromas.

The device itself has a lower slide in the air intake that allows you to control the air supply and regulate the flow for mixing air with the vapor generated by the vapers, achieving a denser, heavier vapor with more aromatic intensity. The slide allows you to achieve a more diluted smoke in the open position, a denser smoke in the semi-closed position or a very dense smoke in the closed position.

In addition, the device has an upper slide in its air intake that allows you to select the suction, either from one or the other vape, or both at the same time and create a combination of aromas. The nozzle is shown in a preferred design form, although it is interchangeable, allowing other shapes and sizes to be incorporated or adopted, thereby obtaining different air flows.

### PREFERRED EMBODIMENT OF THE INVENTION

The present embodiment reveals a flavouring device (1) for cocktails and cooking that comprises a suction body (5) that has an electric motor (6), at least one rechargeable battery (7) that acts as a source of energy for operation of said electric motor (6), a button (8) that allows said electric motor (6) to be activated, a waste collection element (10) and a propeller element (4), which is driven by said electric motor (6), arranged above the waste collection element (10), which allows the aromatized vapor to be sucked; one or two vapers (2) that have an internal tank with cotton impregnated with an aromatic oil and glycol that volatilizes thanks to the heating of a resistance by means of a battery; and an air intake (3) attached to the suction body (5) that has two inlets and is arranged between the propeller element (4) and the vapers (2), which also includes a mouthpiece (9), an opening (11) that is regulated with a lower slide (12) arranged above said suction body (5) and an upper slide (13) that controls the aroma or mixture, by selecting the vapes (2) to use .

The propeller element (4) of the flavouring device (1) is located on the collection element (10), which collects the oil residue that the vapers (2) may generate. These oil remains, as they are not heated and remain outside the air suction zone, do not affect the different changes in aromas.

To obtain an optimal air flow and mixture, between the non-aromatized air and the aroma coming from the vapers (2), the air intake (3) attached to the suction body (5), has an opening (11) for allow air flow from outside. Said opening (11) is located just before the holding area of the vaper mouthpiece (2), this opening (11) being necessary to allow the balance between aroma intensity and the total volume generated. This opening (11) is regulated by the lower slide (12) and can generate smoke of greater or lesser density.

The aromatizing device (1) has an air intake (3) with two inlets, with an internal diameter slightly larger than the diameter of the vapers (2), which ensures the desired tightness. This design generates both support and tightness so that the vapers (2) receive the necessary suction for ignition and generation of the necessary air flow. This air intake (3) is coupled to the suction body (5).

The aromatizing device (1) includes a suction system that, by rotating the propeller (4), activates the vapers (2) and directs the aromatic flow to the mouthpiece (9).

As mentioned previously, the aromatizing device (1) has a suction body (5) in which an electric motor (6) is formed that works with rechargeable batteries (7) and is activated by the button (8). This electric motor (6) generates the necessary force so that, connected to the propeller (4) located on the collecting element (10), it generates the suction of both the vapers (2) and unflavoured air through the opening (11).

The aromatizing device (1) allows you to change the vaper (2) with different aromas instantly, simply by removing the vaper (2) that is used and placing a new vaper (2) with a different aroma, without the need to open, dismantle and clean the circuit to avoid the mixing of aromas, since it has a waste collection element (10) that allows the non-volatilized oil waste from the vaper (2) to be stored, separating them from the diffusion system, which prevents the mixing of the different aromas.

As mentioned previously, the aromatizing device (1) includes a lower slide (12) incorporated in the air intake (3) that allows, by means of lateral rotation, to open and close the air flow of the opening (11), located between the vape (2) and the propeller (4), allowing the air flow from the outside to be controlled according to the position of the slide. By regulating the air flow channelled from the opening (11), different densities and intensities of aromas are generated.

As mentioned above, the flavouring device (1) also includes an upper slide (13) incorporated in the air intake (3) that allows, by turning, to select between one or the other vape (2), or both at the same time. time, thereby generating a combination of different aromas depending on the selection. This upper slide (13) can block, by turning, the passage of vapor from either of the two vapes (2) and generate a different flavour without changing the vape (2), in addition to allowing the passage of aroma from both to the time.

The aromatizing device (1) includes a nozzle (9) incorporated in the air intake (3) designed interchangeably with others of different tube diameter, outlet shape and length.

## Claims

1. Flavouring device for cocktails and cooking that is **characterized in that** it comprises a suction body (5) that has an electric motor (6), at least one rechargeable battery (7) that acts as a source of energy for the operation of said electric motor (6), a button (8) that allows said electric motor (6) to be activated, a waste collection element (10) and a propeller element (4) that is driven by said electric motor (6) arranged above the waste collection element (10) that allows the aromatized vapor to be sucked; one or two vapers (2) that have an internal tank with cotton impregnated with an aromatic oil and glycol that volatilizes thanks to the heating of a resistance by means of a battery; and an air intake (3) attached to the suction body (5), which has two inlets and is arranged between the propeller element (4) and the vapers (2), which also includes a mouthpiece (9), an opening (11) that is regulated with an lower slide (12) arranged above said aspiration body (5) and a upper slide (13) that controls the aroma or mixture, by selecting the vaper (2) to use.

2. Flavouring device for cocktails and cooking according to claim 1, **characterized in that** the air intake (3) has two inlets with an internal diameter slightly larger than the diameter of the vapers (2) to maintain tightness and support for ignition and generation of the aromatized steam flow.

3. Flavouring device for cocktails and cooking according to claim 1, **characterized in that** the air intake (3) has an opening (11), located between the vaper (2) and the propeller (4) that allows an air flow from the exterior for the balance between intensity and volume of aroma generated.

4. Flavouring device for cocktails and cooking according to claim 1, **characterized in that** the air intake (3) has an lower slide (12) that allows the air flow of the opening (11) to be opened and closed by means of lateral rotation. located between the vaper (2) and the propeller (4), allowing the air flow from the outside to be controlled according to the position of the slide.

5. Flavouring device for cocktails and cooking according to claim 1, **characterized in that** the air intake (3) has a upper slide (13) that allows, by means of lateral rotation, to open and close the suction flow of the vapers (2) to select between one or the other vaper (2) or both simultaneously, allowing you to mix the flavour.

## Amended claims

### Amended claims in accordance with Rule 137(2) EPC.

1. Flavouring device for cocktails and cooking, that allows flavoured smoke to be introduced into a cocktail glass or other container, in such a way that the flavoured smoke encounters the material and contents of the container, generating a particular flavour to the cocktail or to food, that is **characterized in that** it comprises:
a suction body (5) that has an electric motor (6);
at least one rechargeable battery (7) that acts as a source of energy for the operation of said electric motor (6);
a button (8) that allows said electric motor (6) to be activated;
two vapers (2) that incorporate flavoured liquid;
a propeller element (4), which is driven by said electric motor (6) and which allows the suction of the aromatized vapor coming from the vapers (2);
an air intake (3) fitted to the suction body (5) that has two inlets to insert the vapers (2), where the air intake (3) has an opening (11) that allows the flow of air from the outside and mixes the non-aromatized air and the aroma from the vapers (2);
a lower slide (12) that allows the air flow of the opening (11) to be opened and closed by lateral rotation;
an upper slide (13) that allows the suction flow of the vapers (2) to be opened and closed by lateral rotation, which allows selecting between one or the other vaper (2);
a waste collection element (10) that collects the oil residue that the vapers (2) may generate and is arranged below the propeller element (4); and
a nozzle (9) incorporated in the air intake (3) through which the aromatic flow from the vapers (2) is directed and allows the application of the aroma.

2. Flavouring device for cocktails and cooking according to claim 1, **characterized in that** the air intake (3) has two inlets with an internal diameter slightly larger than the diameter of the vapers (2).
